# EUROPÄISCHE PATENTSCHRIFT

(11) **EP 1 570 002 B1**
(45) Veröffentlichungstag und Bekanntmachung des Hinweises auf die Patenterteilung: **05.03.2008**
(21) Anmeldenummer: 03812588.6
(22) Anmeldetag: 22.11.2003
(51) Int. Cl.: C08L 69/00, C08K 5/54

(54) **FLAMMWIDRIGE POLYCARBONAT-ZUSAMMENSETZUNGEN MIT PHOSPHOR-SILIZIUM-VERBINDUNGEN**
FLAME-RESISTANT POLYCARBONATE COMPOSITIONS COMPRISING PHOSPHORUS-SILICON COMPOUNDS
COMPOSITIONS POLYCARBONATES IGNIFUGES CONTENANT DES COMPOSES PHOSPHORE-SILICIUM

(30) Priorität: 06.12.2002 DE 10257081
(43) Veröffentlichungstag der Anmeldung: 07.09.2005
(73) Patentinhaber: Bayer MaterialScience AG, 51368 Leverkusen (DE)
(72) Erfinder: SEIDEL, Andreas, 41542 Dormagen (DE); WAGNER, Michael, 47443 Moers (DE); ENDTNER, Jochen, 50678 Köln (DE); EBENBECK, Wolfgang, 51373 Leverkusen (DE); ECKEL, Thomas, 41540 Dormagen (DE); WITTMANN, Dieter, 51375 Leverkusen (DE)
(86) Internationale Anmeldenummer: PCT/EP2003/013151
(87) Internationale Veröffentlichungsnummer: WO 2004/052990

(56) Entgegenhaltungen:
- DE-A- 2 013 547
- DE-A- 2 812 402
- PATENT ABSTRACTS OF JAPAN vol. 2000, no. 26, 1. Juli 2002 (2002-07-01) -& JP 2001 247582 A (NIPPON UNICAR CO LTD), 11. September 2001 (2001-09-11) in der Anmeldung erwähnt

## Beschreibung

Die vorliegende Erfindung betrifft Polycarbonat-Zusammensetzungen, die mit Phosphor-Silizium-Verbindungen hoher thermischer Stabilität und geringer Flüchtigkeit flammwidrig ausgerüstet sind. Bevorzugte Phosphor-Silizium-Verbindungen entstehen durch thermische Oligomerisierung aus phosphorylierten Silanen.

Um die in vielen Anwendungsbereichen bestehenden hohen Anforderungen an die Flammwidrigkeit der zum Einsatz kommenden Materialien zu erfüllen, müssen Kunststoffe in der Regel mit Flammschutzmitteln ausgerüstet werden. Eine Vielzahl als Flammschutzmittel in Frage kommende Substanzen ist bekannt und auch kommerziell erhältlich. Beispielhaft seien genannt Halogenverbindungen, Phosphorverbindungen, Siliziumverbindungen, Zinkborate und Metallhydroxide. Aufgrund der oft vorteilhafteren Brandnebenerscheinungen bezüglich Rauchgasdichte, -toxizität und -korrosivität sowie insbesondere aus ökotoxikologischen Gründen werden halogenfreie Flammschutzmittelsysteme bevorzugt eingesetzt.

Flammwidrige Polycarbonat-Zusammensetzungen sind grundsätzlich bekannt und kommen in verschiedenen Anwendungsbereichen, insbesondere im Elektro- und Elektroniksektor, in der Datentechnik, im Bauwesen und im Luftfahrt und Schienenfahrzeugwesen zum Einsatz. Als geeignete halogenfreie Flammschutzmittel werden insbesondere Phosphorverbindungen, Phosphor-Stickstoff-Verbindungen und Siliziumverbindungen beschrieben.

Die Verwendung von Phosphorverbindungen, insbesondere von monomeren und oligomeren Phosphorsäureestern als Flammschutzmittel in PC/ABS-Zusammensetzungen wird beispielsweise in den EP-A 0 345 522, EP-A 0 363 608 und EP-A 0 640 655 beschrieben. Die Phosphorsäureester zeigen neben ihrer Eignung als Flammschutzadditiv eine weichmachende Wirkung. Durch die Flammschutzausrüstung wird daher die Wärmeformbeständigkeit der Zusammensetzungen zum Teil erheblich reduziert.

Die Verwendung von Phosphor-Stickstoff-Verbindungen, wie Phosphonataminen, Phosphazenen und Phosphoramidaten als Flammschutzmittel in Polycarbonat-Zusammensetzungen wird beispielsweise in den WO 01/18106, EP-A 1 116 772, EP-A 0 728 811, US-A 6,414,060, US-A 5,973,041 und WO 00/12612 beschrieben. Diese Verbindungen sind im Vergleich zu den zuvor genannten Phosphorsäureestern im Allgemeinen weit weniger weichmachend, neigen aber bei den höheren Temperaturen, wie sie bei der Compoundierung und Verarbeitung von Polycarbonat-Zusammensetzungen typisch sind, zur thermischen Zersetzung und/oder zum Abbau des Polycarbonats.

Die Verwendung von Siliziumverbindungen, insbesondere von speziellen Silikonen, als Flammschutzmittel in Polycarbonatzusammensetzungen wird beispielsweise in den US-A 6,001,921, WO 99/28387, WO 00/39217, WO 00/46299 und WO 00/64976 beschrieben. Die eingesetzten Silikone lassen sich in Polycarbonat ohne nennenswerten Molekulargewichtsabbau einarbeiten, sind thermisch stabil und wirken nicht oder aber nur geringfügig weichmachend auf das Polycarbonat. Nachteil der Silikone ist ihre vergleichsweise geringe Flammschutzeffizienz, was einen Einsatz auf reines, d.h. nicht .schlagzähmodifziertes Polycarbonat beschränkt. Eine Flammschutzausrüstung von Blends wie PC/ABS-Blends ist mit Silikonen allein zumindest in wirtschaftlich sinnvoller Art und Weise nicht möglich.

Aufgrund des Mangels an ausreichender Effizienz werden Silikone häufig in Kombination mit anderen Flammschutzmitteln, wie beispielsweise den zuvor genannten Phosphorverbindungen eingesetzt. Beispielhaft sei hier die US 2002/0099160 A1 genannt, in der eine Kombination aus einem speziellen Silikon und einem oligomeren Phosphorsäureester als Flammschutzpacket für PC/ABS-Blends beschrieben wird. Durch Zusatz des Silikons lässt sich die für eine Flammschutzausrüstung erforderliche Menge an Phosphat reduzieren und damit dessen für einige Hochtemperaturanwendungen unerwünschten Weichmachungseffekt begrenzen, nicht jedoch absolut verhindern.

In der JP-A 2001-247582 werden phosphorylierte Polyorganosiloxane als wenig weichmachende Flammschutzmittel für Polycarbonat und PC/ABS-Blends beschrieben. Die hier als Flammschutzadditiv eingesetzten Verbindungen neigen aufgrund ihrer geringen Verträglichkeit mit dem Polycarbonat und ihrer zum Teil hohen Flüchtigkeit bei den üblichen Verarbeitungstemperaturen zum Ausbluten, was insbesondere bei der Spritzgussverarbeitung Probleme durch Stillstandzeiten nach sich ziehen kann.

Aufgabe der vorliegenden Erfindung war es daher, neue Phosphor-Siliziumverbindungen mit hoher FR-Effizienz, hoher thermischer Stabilität, geringer Flüchtigkeit und guter Verträglichkeit mit aromatischen Polycarbonaten zu entwickeln, und auf deren Basis flammwidrige Polycarbonat-Zusammensetzungen mit verbessertem Verarbeitungsverhalten bereitzustellen.

Überraschenderweise wurde gefunden, dass Polycarbonat-Zusammensetzungen, welche mit speziellen Phosphor-Silizium-Verbindungen additiviert sind, das gewünschte Eigenschaftsprofil aufweisen.

Gegenstand der vorliegenden Erfindung sind daher Polycarbonat-Zusammensetzungen enthaltend schwerflüchtige Phosphor-Silizium-Verbindungen mit einem Phosphorgehalt von 1 bis 20 Gew.-%, insbesondere von 3 bis 17 Gew.-%, bevorzugt von 5 bis 15 Gew.-%, besonders bevorzugt von 7 bis 13 Gew.-% und einem Siliziumgehalt von 1 bis 20 Gew.-%, insbesondere von 3 bis 17 Gew.-%, bevorzugt von 5 bis 15 Gew.-%, besonders bevorzugt von 7 bis 13 Gew.-%, die bei 280°C eine Massenflüchte von weniger als 30 Gew.-%, vorzugsweise weniger als 20 Gew.-%, besonders bevorzugt weniger als 15 Gew.-%, insbesondere weniger als 10 Gew.-%, ganz besonders bevorzugt weniger als 5 Gew.-% (beurteilt in einer thermogravimetrischen Analyse unter Stickstoff-Inertgas bei einer Aufheizrate 20 K/min) auf weisen, wobei sich die Gewichtsangaben jeweils auf die Phosphor-Silizium-Verbindung beziehen.

Herstellungsverfahren für erfindungsgemäß als Flammschutzmittel oder Flammschutzmittelsynergist für Polycarbonat-Zusammensetzungen geeigneter Phosphor-Silizium-Verbindungen sind im Prinzip bekannt. Beispiele von Verfahren zur Herstellung solcher Verbindungen finden sich in Phosphorus, Sulfur, and Silicon 68 (1992) 107-114 und der darin zitierten Literatur. Die hier beschriebenen Verfahren und daraus resultierenden Verbindungen sind aber nur als Beispiele zu verstehen und schränken in keiner Weise den Umfang der vorliegenden Erfindung ein.

Bevorzugt kommen beispielsweise solche Phosphor-Silizium-Verbindungen zum Einsatz, die durch thermisch induzierte Oligomerisierung aus phosphorylierten Silanen gewonnen werden können.

Die phosphorylierten Silane entstehen beispielsweise unter Freisetzung von Halogenwasserstoff, Chlormethan bzw. Chlorethan bei der Umsetzung von Phosphonsäureestem der allgemeinen Formel (I) mit Halogensilanen der allgemeinen Formel (II), 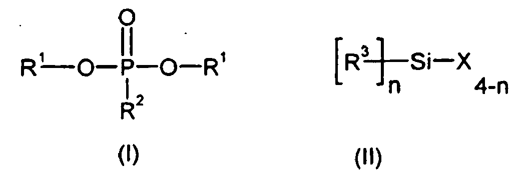 in welchen
- n: eine Zahl zwischen 0 und 3, vorzugsweise 2,
- X: ein Halogenatom, vorzugsweise Chlor oder Brom,
- R¹: unabhängig voneinander Wasserstoff oder C₁-C₄-Alkyl, vorzugsweise Methyl oder Ethyl,
- R²: a) einen gegebenenfalls durch Aryl (z.B. Phenyl) oder Alkyl (z.B. C₁-C₄-Alkyl) substituierten Arylrest, vorzugsweise Phenyl oder
b) einen gegebenenfalls durch Aryl (z.B. Phenyl) substituierten Alkylrest, vorzugsweise Methyl, Ethyl, Propyl oder Butyl oder
c) einen gegebenenfalls durch Aryl (z.B. Phenyl) oder Alkyl (z.B. C₁-C₄-Allyl) substituierten Aryloxyrest, vorzugsweise Phenoxy oder
d) einen gegebenenfalls durch Aryl (z.B. Phenyl) substituierten Alkoxyrest, vorzugsweise Methoxy, Ethoxy oder Propoxy oder.
e) Wasserstoff, und
- R³: jeweils unabhängig voneinander gleiche oder unterschiedliche Alkylreste, vorzugsweise C₁-C₈-Alkyl insbesondere Methyl, Ethyl; Propyl und Butyl, Arylreste oder mit Alkyl, vorzugsweise C₁-C₄-Alkyl substituierte Arylreste, insbesondere Phenyl, Kresyl, Xylenyl, Propylphenyl oder Butylphenyl
darstellen.

Die phosphorylierten Silane oder alternativ auch Gemische solcher phosphorylierten Silane werden bei Temperaturen oberhalb 70°C, insbesondere oberhalb 100°C, bevorzugt oberhalb 130°C thermisch oligomerisiert, wobei das dabei entstehende monomere Phosphonat durch kontinuierliche Destillation im Vakuum aus dem Reaktionsgemisch entfernt wird.

Beispiele für besonders bevorzugt als Flammschutzadditiv geeignete Phosphor-Silizium-Verbindungen sind solche der allgemeinen Formel (III), 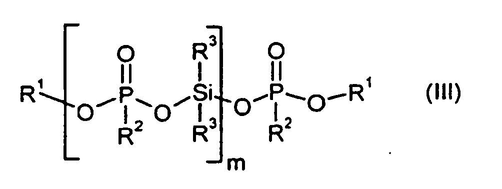 wobei
- R¹, R² und R³: die oben genannte Bedeutung haben und
- m: einen Zahlenwert von 2 bis 1000, vorzugsweise von 2-100, insbesondere von 2-20, bevorzugt von 2-10 bedeutet und
wobei die Reste R² und R³ innerhalb der Polymerkette von Monomer- zu Monomereinheit variieren können.

Insbesondere kommen solche Verbindungen der allgemeinen Formel (III) zum Einsatz, in denen mindestens 10 Mol-%, bevorzugt mindestens 20 Mol-%, insbesondere mindestens 30 Mol-%, besonders bevorzugt mindestens 40 Mol-%, ganz besonders bevorzugt mindestens 50 Mol-% der Substituenten R² und R³ Aryl- oder Aryloxyreste, vorzugsweise Phenyl oder Phenoxy, sind.

Bevorzugt als Flammschutzadditiv zum Einsatz kommende Phosphor-Silizium-Verbindungen sind des weiteren solche der allgemeinen Formel (IV), 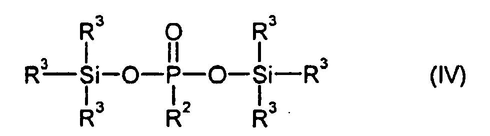 wobei
- R²: die oben angegebene Bedeutung hat und
- R³: für gleiche oder unterschiedliche Arylreste steht, insbesondere für Phenyl, Kresyl und Xylyl steht.

Die phosphorylierten Silane der Formel (IV) sind ebenfalls unter Freisetzung von Halogenwasserstoff, Chlormethan bzw. Chlorethan aus der Umsetzung von entsprechenden Phosphonsäureestern der allgemeinen Formel (I) mit entsprechenden Halogensilanen der allgemeinen Formel (II) zugänglich.

Selbstverständlich ist es auch möglich, Gemische verschiedener erfindungsgemäßer Phosphor-Silizium-Verbindungen als Flammschutzmittel einzusetzen.

Die Phosphor-Silizium-Verbindungen werden in den flammwidrig auszurüstenden . Polycarbonat-Zusammensetzungen in Mengen von 0,05 bis 30 Gew.-Teilen, bevorzugt von 0,1 bis 20 Gew.-Teilen, insbesondere von 0,2 bis 15 Gew-Teilen, besonders bevorzugt von 0,3 bis 10 Gew.-Teilen, ganz besonders bevorzugt von 0,5 bis 5 Gew.-Teilen, höchst bevorzugt 1,5 bis 8 Gew.-Teilen, bezogen auf 100 Gew.-Teile Polycarbonat-Zusammensetzung eingesetzt. Die optimale zu verwendende Menge an erfindungsgemäßen Verbindungen hängt von der Natur der Polycarbönat-Zusammensetzung, d.h. dem eventueller Zusatz weiterer Polymere und/oder Schlagzährnodifikatoren, der Natur weiterhin eingesetzter Zusatzstoffe und der Art der erfindungsgemäß eingesetzten Verbindung ab.

Die Polycarbonat-Zusammensetzungen, die mit den Phosphor-Silizium-Verbindungen flammwidrig ausgerüstet werden können, enthalten
- A): 60 bis 100 Gew.-Teile, bevorzugt 70 bis 100 Gew.-Teile, insbesondere 80 bis 100 Gew.-Teile, besonders bevorzugt 90 bis 100 Gew.-Teile, ganz besonders bevorzugt 93 bis 100 Gew.-Teile aromatisches Polycarbonat und/oder Polyestercarbonat,
- B): 0 bis 40 Gew.-Teile, bevorzugt 0 bis 30 Gew.-Teile, insbesondere 0 bis 25 Gew.-Teile, besonders bevorzugt 0 bis 10 Gew.-Teile, ganz besonders bevorzugt 0 bis 5 Gew.-Teile mindestens ein Polymer ausgewählt aus Vinyl(co)polymerisaten, kautschukmodifiziertes Vinyl(co)polymerisaten und aromatischen Polyestern,
- C): 0 bis 5 Gew.-Teile, bevorzugt 0 bis 2 Gew.-Teile, insbesondere 0 bis 1 Gew.-Teile, besonders bevorzugt 0 bis 0,5 Gew.-Teile, ganz besonders bevorzugt 0,2 bis 0,5 Gew.-Teile fluoriertes Polyolefin und
- D): bis zu 20 Gew.-Teile, bevorzugt bis zu 15 Gew.-Teile, insbesondere bis zu 10 Gew.-Teile, besonders bevorzugt bis zu 5 Gew.-Teile, ganz besonders bevorzugt bis zu 2 Gew.-Teile weiterer Polymere und/oder Polymeradditive,
wobei sich die Gew.-Teile der Komponenten A bis D zu 100 addieren.

### Komponente A

Erfindungsgemäß geeignete aromatische Polycarbonate und/oder aromatische Polyestercarbonate gemäß Komponente A sind literaturbekannt oder nach literaturbekannten Verfahren wie beispielsweise dem Phasengrenzflächen- oder dem Schmelzepolymerisationsverfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (V) 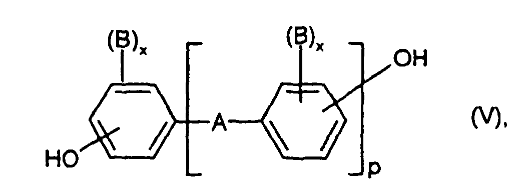 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können
oder ein Rest der Formel (VI) oder (VII) darstellen, 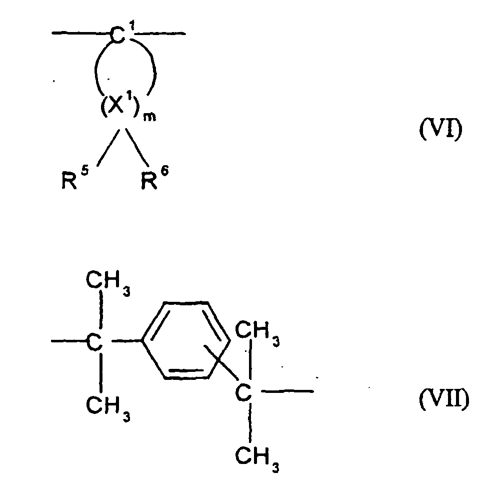
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X' individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-düsopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsülfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxyaryloxy-Endgruppen eingesetzt werden. Diese sind bekannt (beispielsweise US-A 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt bzw. besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Es können auch Gemische aromatischer Dicarbonsäuredihalogenide eingesetzt werden, besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mole Diphenole und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetra-chlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Poly(ester)carbonate haben mittlere gewichtsgemittelte Molekulargewichte (M_{w}, gemessen z. B. durch Ultrazentrifuge, Streulichtmessung bzw. Gelpermeationschromatographie) von 10.000 bis 200.000, vorzugsweise 15.000 bis 80.000, besonders bevorzugt 17.000 bis 40.000.

Die thermoplastischen, aromatischen Polycarbonate und Polyestercarbonate können allein oder im beliebigen Gemisch eingesetzt werden..

### Komponente B

Die erfindungsgemäßen Polycarbonatzusammensetzungen können als Komponente B mindestens ein weiteres Polymerisat ausgewählt aus der Gruppe der Vinyl(co)polymerisate, kautschukmodifizierten Vinyl(co)polymerisate und (bevorzugt aromatischen) Polyester enthalten.

Bevorzugte kautschukmodifizierte Vinyl(co)polymerisate sind Pfropfpolymerisate von mindestens einem Vinylmonomeren auf mindestens einen Kautschuk mit einer Glasübergangstemperatur <10°C als Pfropfgrundlage, insbesondere solche Pfropfpolymerisate von
- B.1: 5 bis 95 Gew.-%, vorzugsweise 10 bis 90 Gew.-%, insbesondere 20 bis 70 Gew.-% Monomeren einer Mischung aus
- B.1.1: 50 bis 99 Gew.-%, vorzugsweise 50 bis 90 Gew.-%, besonders bevorzugt 55 bis 85 Gew.-%, ganz besonders bevorzugt 60 bis 80 Gew.-% Vinylaromaten und/oder kemsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
- B.1.2: 1 bis 50 Gew.-%, vorzugsweise 10 bis 50 Gew.-%, besonders bevorzugt 15 bis 45 Gew.-%, ganz besonders bevorzugt 20 bis 40 Gew.-% Vinylcyanide (ungesättigte Nitrile wie Acrylnitril und Methacrylnitril) und/oder (Meth)Acrylsäure-(C₁-C₈)-Alkylester. (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid) auf
- B.2: 95 bis 5 Gew.-%, vorzugsweise 90 bis 10 Gew.-%, insbesondere 80 bis 30 Gew.-% einer oder mehrerer, Kautschuke mit Glasübergangstemperaturen <10°C, vorzugsweise <0°C, besonders bevorzugt < -20°C als Pfropfgrundlage.

Die Pfropfgrundlage hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind Styrol und Acrylnitril.

Für die Pfropfpolymerisate geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke sowie Kompositkautschuke, bestehend aus zwei oder mehr der zuvor genannten Systeme.

Bevorzugte Pfropfgrundlagen sind Dienkautschuke. Dienkautschuke im Sinne der vorliegenden Erfindung sind solche z.B. auf Basis Butadien, Isopren etc. oder Gemische von Dienkautschuken oder Copolymerisate von Dienkautschuken oder deren Gemischen mit weiteren copolymerisierbaren Monomeren, wie beispielsweise Butadien/Styrol-Copolymerisate, mit der Maßgabe, dass die Glasübergangstemperatur der Pfropfgrundlage <10°C, vorzugsweise <0°C, besonders bevorzugt <-10°C liegt.

Besonders bevorzugt ist reiner Polybutadienkautschuk.

Besonders bevorzugte Pfropfpolymerisate sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage beträgt vorzugsweise mindestens 30 Gew.-%, insbesondere mindestens 40 Gew.-%.

Der Gelgehalt der Pfropfgrundlage wird bei 25°C in Toluol bestimmt (M. Hoffmann, H. Krömer, R. Kuhn, Polymeranalytik I und II, Georg Thieme-Verlag, Stuttgart 1977).

Die Pfropfcopolymerisate können durch radikalische Polymerisation, z.B. durch Emulsions-, Suspensions-, Lösungs- oder Massepolymerisation hergestellt werden. Vorzugsweise werden sie durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Als Pfropfgrundlage geeignete Acrylatkautschuke sind vorzugsweise Polymerisate aus Acrylsäurealkylestern, gegebenenfalls auch Copolymerisate mit bis zu 40 Gew.-%, bezogen auf die Pfropfgrundlage anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage.

Bei cyclischen vernetzenden Monomeren mit mindestens drei ethylenisch ungesättigten Gruppen ist es vorteilhaft, die Menge auf unter 1 Gew.-% der Pfropfgrundlage zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE-A 3 704 657, DE-A 3 704 655, DE-A 3 631 540 und DE-A 3 631 539 beschrieben werden.

Bevorzugt geeignete Vinyl(Co)Polymerisate sind solche Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus

50 bis 99, vorzugsweise 60 bis 80 Gew.-% Vinylaromaten und/oder kemsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und

1 bis 50, vorzugsweise 20 bis 40 Gew.-% Vinylcyanide (ungesättigte Nitrile) wie Acrylnitril und "Methacrylnitril und/oder (Meth)Acrylsäure-(C₁-C₈)-Alkylester (wie Methylmethacrylat; n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate sind harzartig und thermoplastisch.

Besonders bevorzugt ist das Copolymerisat aus Styrol und Acrylnitril sowie Polymethylmethacrylat.

Die (Co)Polymerisate sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

Bevorzugt geeignete Polyester sind Polyalkylenterephthalate. Es handelt sich um Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 mol%, vorzugsweise bis zu 10 mol-%, andere aliphatische Diole mit 3 bis 12 C-Atomen oder cycloaliphatische Diole mit 6 bis 21 C-Atomen enthalten, z. B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen drei- oder vierwertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind, und Mischungen dieser Polyalkylenterephthalate.

Bevorzugte Mischungen von Polyalkylenterephthalaten enthalten 0 bis 50 Gew.-%, vorzugsweise 0 bis 30 Gew.-%, Polybutylenterephthalat und 50 bis 100 Gew.-%, vorzugsweise 70 bis 100 Gew.-%, Polyethylenterephthalat. Besonders bevorzugt ist Polyethylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 1 Gewichtsteile) bei 25°C im Ubbelohde-Viskosimeter.

Die Polyalkylenterephthalate lassen sich nach bekannten Methoden herstellen (z.B. Kunststoff-Handbuch, Band VIII, S. 695 ff., Carl-Hanser-Verlag, München 1973).

### Komponente C

Als sogenannte Antidrippingmitteln, welche die Neigung des Materials zum brennenden Abtropfen im Brandfall verringern, kommen in den Polycarbonat-Zusammensetzungen ggf. fluorierten Polyolefine zum Einsatz.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate oder mit einer Emulsion eines Copolymerisats (gemäß Komponente B), vorzugsweise auf Styrol/Acrylnitril-Basis oder Polymethylmethacrylat-Basis eingesetzt werden, wobei das fluorierte Polyolefin als Emulsion mit einer Emulsion des Pfropfpolymerisats oder des Copolymerisats gemischt und anschlie-ßend koaguliert wird.

Weiterhin können die fluorierten Polyolefine als Präcompound mit dem Pfropfpolymerisat oder einem Copolymerisat, vorzugsweise auf Styrol/Acrylnitril- oder Polymethylmethacrylat-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril, Methylmethacrylat und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 80 Gew.-%, insbesondere 8 bis 60 Gew.-%. Die zuvor genannten Einsatzkonzentrationen der Komponente C beziehen sich auf das fluorierte Polyolefin.

### Komponente D

Als Komponente D können die Polycarbonatzusammensetzungen weitere Polymere und/oder Polymeradditive enthalten.

Beispiele für weitere Polymere sind insbesondere solche, die im Brandgeschehen durch Unterstützung der Ausbildung einer stabilen Kohleschicht, synergistische Wirkung zeigen können. Bevorzugt sind dieses Polyphenylenoxide und -sulfide, Epoxid- und Phenolharze, Novolake und Polyether.

Als mögliche Polymeradditive können zum Einsatz kommen Hitzestabilisatoren, Hydrolysestabilisatoren, Lichtstabilisatoren, Fließ- und Verarbeitungshilfsmittel, Gleit- und Entformungsmittel, UV-Absorber, Antioxidantien, Antistatika, Konservierungsmittel, Haftvermittler, faser- oder teilchenförmige Füllstoffe und Verstärkungsstoffe, Farbstoffe, Pigmente, Nukleierungsmittel, Schlagzähmodifkatoren, Verschäumungsmittel, Verarbeitungshilfsmittel, weitere flammhemmende Zusätze und Mittel zur Verringerung der Rauchentwicklung sowie Mischungen aus den genannten Additiven.

Als weitere flammhemmende Zusätze kommen insbesondere und bevorzugt bekannte phosphorhaltige Verbindungen wie monomere und oligomere Phosphor- und Phosphonsäureester, Phosphonatamine, Phosphoramidate und Phosphazene, Silikone und ggf. fluorierte Alkyl- oder Arylsulfonsäuresalze in Frage. Derartige Verbindungen sind in dem im Stand der Technik dieser Anmeldung zitierten Patentannieldungen ausreichend beschrieben. Darüber hinaus eignen sich als Flammschutzsynergisten und Rauchunterdrücker insbesondere anorganische Partikel jeglicher Art in nanoskaliger Form, silikatische Mineralien wie Talk und Wollastonite, anorganische Borate wie Zinkborat, Zinnverbindungen wie Zinkstannate und Zinkhydroxystannate und Borphosphat.

Die erfindungsgemäßen Zusammensetzungen werden hergestellt, indem man die jeweiligen Komponenten A-D mit den Phosphor-Silizium-Verbindungen in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Zusammensetzungen können zur Herstellung von Formteilen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formteile sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; weiterhin Platten, Rohre, Elektroinstallationskanäle, Profile für den Bausektor, Innenausbau und Außenanwendungen; Teile aus dem Gebiet der Elektrotechnik wie Schalter und Stecker sowie Automobilinnen- und -außenteile.

Insbesondere können die erfindungsgemäßen Zusammensetzungen beispielsweise zur Herstellung von folgenden Formteilen verwendet werden:
Innenausbauteile für Schienenfahrzeuge, Schiffe, Flugzeuge, Busse und Automobile, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, flächige Wandelemente, Gehäuse für Sicherheitseinrichtungen, Formteile für Sanitär- und Badausrüstungen, und Gehäuse für Gartengeräte.

Die folgenden Beispiele dienen ausschließlich der weiteren Erläuterung der Erfindung.

### Beispiele

### I) Phosphor-Silizium-Verbindung

### (in der Tabelle 1 und 2 als Komponente E3 bezeichnet)

### 1.) Herstellung eines phosphorylierten Silans

19,6 g (158 mmol) Dimethylmethanphosphonat wird unter Argon-Schutzgasatmosphäre in einem Dreihalskolben, ausgestattet mit Thermometer und Rückflusskühler, bei Raumtemperatur tropfenweise zu 20,0 g (79 mmol) Diphenyldichlorsilan gegeben. Nach vollständiger Zugabe wird die Reaktionsmischung gerührt, bis kein Gas (Methylchlorid) mehr entweicht.

### 2.) Oligomerisierung des phosphorylierten Silans

Die Reaktionsmischung aus 1) wird bei 150°C thermisch oligomerisiert und das dabei entstehende Dimethylmethanphosphonat im Vakuum bei einem Druck von 0,08 mbar kontinuierlich bis zur Gewichtskonstanz der Reaktionsmischung abdestilliert. Es resultiert eine farblose, hochviskose Flüssigkeit, die bei der Abkühlung auf Raumtemperatur zu einer festen, glasigen Substanz erstarrt.

Ausbeute: 20,7 g
Schmelzpunkt: ca. 54°C
Elementaranalyse: Kohlenstoff 55 %, Silizium 12 %, Phosphor 10 %
Thermogravimetrische Analyse: 4 Gew.-% Massenverlust bei 280°C, gemessen im Stickstoffstrom bei einer Aufheizrate von 20 K/h
Molekulargewicht: M_{w}=963 g/mol (gemessen per Gelpermeationschromotographie mit Detektor DAD UV 260 nm; die quantitative Auswertung erfolgte anhand einer für Polysiloxane bei Raumtemperatur in Dichlormethan gültigen Eichbeziehung)

Die Ergebnisse der Charakterisierung deuten darauf hin, dass im Einklang mit der Literatur Phosphorus, Sulfur, and Silicon 68 (1992) 107-114 in der Summe der Schritte 1) und 2) die Reaktion 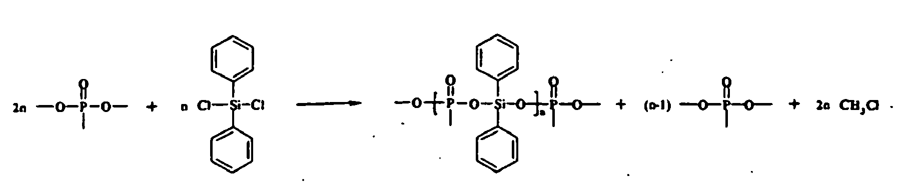 abgelaufen und dabei im Wesentlichen ein Produkt mit einem gewichtsgemittelten n-Wert von etwa 3 entstanden ist.

### II) Polycarbonat-Zusammensetzungen

Die Abmischungen werden durch Schmelzkompoundierung auf einem Mini-Extruder des Typs TS/I-02 (Firma DSM) bei einer Massetemperatur von 290°C (PC/ABS-Zusammensetzungen) bzw. 310°C (PC-Zusammensetzungen) hergestellt. Alle verwendeten Prüfkörper werden durch Spritzgießen auf einer mit dem Extruder verbundenen Spritzgussmaschine des Typs TS/I-01 (Firma DSM) erhalten. Die Werkzeugtemperatur beträgt 80°C.

### Komponente A1

Lineares Polycarbonat auf Basis Bisphenol A mit einer relativen Lösungsviskosität von 1,28, gemessen in CH₂Cl₂ als Lösungsmittel bei 25°C und in einer Konzentration von 0,5 g/100 ml.

### Komponente A2

Lineares Polycarbonat auf Basis Bisphenol A mit einer relativen Lösungsviskosität von 1,26, gemessen in CH₂Cl₂ als Lösungsmittel bei 25°C und in einer Konzentration von 0,5 g/100 ml.

### Komponente B

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuks (mittlerer Teilchendurchmesser d₅₀ = 0,3 µm), hergestellt durch Emulsionspolymerisation.

### Komponente C1

Tetrafluorethylenpolymerisat als koagulierte Mischung aus einer Pfropfpolymerisat-Emulsion gemäß oben genannter Komponente B in Wasser und einer Tetrafluorethylenpolymerisat-Emulsion in Wasser. Das Gewichtsverhältnis Pfropfpolymerisat B zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%; der mittlere Teilchendurchmesser liegt zwischen 0,05 und 0,5 µm. Die Pfropfpolymerisat-Emulsion besitzt einen Feststoffgehalt von 34 Gew.-%.

Die Emulsion des Tetrafluorethylenpolymerisats (Teflon® 30 N von DuPont) wird mit der Emulsion des Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente D1

Pentaerithrithtetrastearat (PETS) als Entformungsmittel

### Komponente D2

Phosphitstabilisator

### Komponente E1

Disflamol^{®} TP: Triphenylphosphat der Fa. Bayer AG, Leverkusen, Deutschland

### Komponente E2

Silres^{®} SY 300: Silanolfunktionelles festes Phenyl-Propyl-Polysiloxan der Fa. Wacker-Chemie GmbH, München, Deutschland

### Untersuchung der Eigenschaften der erfindungsgemäßen Formmassen

Die Evaluierung der Flammwidrigkeit der Zusammensetzungen erfolgt in insgesamt drei Prüfverfahren.

Ein erster Test erfolgt in Anlehnung an die Glühdrahtprüfung gemäß IEC 60695-2-12. Ein glühender Metalldraht wird mit einer Temperatur von 960°C für 30 s an Prüfkörper der Wandstärke 1,5 mm gepresst und der Grad der Flammwidrigkeit der Zusammensetzung anhand der maximalen Flammenhöhe während der Einwirkzeit des Glühdrahtes und der nachfolgenden Nachbrennzeit sowie anhand der Nachbrennzeit nach Entfernen des Glühdrahtes beurteilt. Der Test gilt als bestanden, wenn die Nachbrennzeit nach Entfernen des Glühdrahtes 30 s nicht überschreitet. Reduzierte maximale Flammenhöhen werden als Indiz für eine verbesserte Flammwidrigkeit herangezogen, haben aber keinen Einfluss auf das Bestehen des Tests.

Ein zweiter Test zur Beurteilung der Flammwidrigkeit der Zusammensetzungen erfolgt in Anlehnung an UL-Subj. 94 V an Stäben der Dicke 1,5 mm. Hierbei werden vertikal montierten Stäbe von unten mit einer definierten Kleinbrennerflamme für 10 s beaufschlagt, die Zeit bis zum Erlöschen bestimmt, um nach dem Erlöschen eine zweite Beflammung für 10 s durchzuführen und erneut die Zeit bis zum Erlöschen zu bestimmen. Dieses erfolgt an insgesamt 5 Stäben. Beurteilt wird die Summe der 10 Einzelnachbrennzeiten und die Tendenz zum Abtropfen brennenden Materials während des Versuchs. Die beste Bewertung V-0 erhalten Materialien, die nicht brennend abtropfen, bei denen die Gesamtnachbrennezeit 50 s nicht überschreitet und bei denen keine Einzelnachbrennzeit länger als 10 s ist. Die Bewertung V-2 erlaubt brennendes Abtropfen. Der Test gilt als nicht bestanden, wenn die Gesamtnachbrennzeit der zehn Einzelbeflammungen 250 s überschreitet oder mindestens eine Einzelnachbrennzeit größer als 30 s ist.

Ein dritter Test zur Beurteilung der Flammwidrigkeit der Zusammensetzungen erfolgt in Anlehnung an den LOI-Test ("low oxygen index") nach ASTM D 2863 an Stäben der Wandstärke 4,0 mm, wobei vertikal montierte Prüfkörper am oberen Ende in einer Stickstoff-Sauerstoffatmosphäre variablen O₂-Gehalts gezündet werden und der Sauerstoffgehalt bestimmt wird, bei der der Prüfkörper gerade von selbst erlischt.

Die Neigung zum Ausbluten flüchtiger Komponenten während der Verarbeitung ("Juicing") wird anhand einer dynamisch im Stickstoffstrom durchgeführten thermogravimetrischen Analyse beurteilt. Herangezogen wird der Masseverlust der Zusammensetzung bei 280°C, der bei einer Aufheizrate von 20 K/min bestimmt wird.

**Tabelle 1: Ausprüfung in Polycarbonat**

| Komponenten | 1 | 2 | 3 | 4 |
|---|---|---|---|---|
| (Angaben in Gew.-Teilen) | (Vergleich) | | | |
| A1 (PC) | 100 | 100 | 100 | 100 |
| E3 (Phosphor-Silizium-Verbindung) | - | 1 | 3 | 5 |
| Bewertung im UL94V-Test | V-2 | V-2 | V-0 | V-0 |
| Gesamtnachbrennzeit im UL94V-Test [s] | 56 | 15 | 0 | 0 |
| Glühdrahttest - Flammenhöhe [mm] | 83 | 55 | 45 | 47 |
| Glühdrahttest - Nachbrennzeit [s] | >30 | 20 | 3 | 1 |
| Glühdrahttest bestanden | nein | ja | ja | ja |
| LOI-Screeningtest [% O₂] | 26 | 28 | 29 | 29 |
| TGA - Masseverlust [%] | 0,3 | 0,2 | 0,4 | 0,7 |

Die Daten aus Tabelle 1 zeigen, dass reines Polycarbonat mit schwerflüchtigen Phosphor-Silizium-Verbindungen flammwidrig ausgerüstet werden kann. Die Zusammensetzungen der Beispiele 2-4 liefern transparente Prüfkörper, was die Verträglichkeit des Additivs mit der Polymerphase zeigt. Schon mit einer so kleinen Konzentration wie nur 1 Gew.-Teil lassen sich mit der Phosphor-Silizium-Verbindung deutliche Verbesserungen der Flammwidrigkeit erzielen (Reduktion der Nachbrennzeiten im UL94V-Test, Bestehen des Glühdrahttest und Erhöhung des LOIs). Bei Zusatz von 3 Gew.-% der Phosphor-Silicium-Verbindung wird sogar eine V-0-Bewertung im UL94V-Test erzielt.

**Tabelle 2: Ausprüfung in PC/ABS-Blends**

| Komponenten | 5 | 6 | 7 | 8 | 9 |
|---|---|---|---|---|---|
| (Angaben in Gew.-Teilen) | (Vergleich) | | | (Vergleich) | (Vergleich) |
| A2 (PC) | 94,5 | 94,5 | 94,5 | 94,5 | 94,5 |
| C1 (PTFE/ABS-Pfropfpolymerisat-Koagulat) | 5,0 | 5,0 | 5,0 | 5,0 | 5,0 |
| D1 (Entfortnun8smittel) | 0,4 | 0,4 | 0,4 | 0,4 | 0,4 |
| D2 (Stabilisator) | 0,1 | 0,1 | 0,1 | 0,1 | 0,1 |
| E1 (Phosphorsäureester) | - | - | - | 5 | - |
| E2 (Silikon) | - | - | - | - | 5 |
| E3 (Phosphor-Silizium-Verbindung) | - | 3 | 5 | - | - |
| B (ABS-Pfropfpolymerisat aus C1) | 4,5 | 4,5 | 4,5 | 4,5 | 4,5 |
| PTFE aus C1 | 0,5 | 0,5 | 0,5 | 0,5 | 0,5 |
| Bewertung im UL94V-Test | NB | V-2 | V-2 | NB | NB |
| Gesamtnachbrennzeit im UL94V-Test [s] | >250 | 75 | 30 | >250 | >250 |
| Glühdrahttest - max. Flammenhöhe [mm] | 110 | 97 | 92 | 80 | 100 |
| Glühdrahttest - Nachbrennzeit [s] | >30 | 9 | 9 | 10 | >30 |
| Glühdrahttest bestanden | nein | ja | ja | ja | nein |
| LOI-Screeningtest [% O₂] | 25 | 26 | 27 | 27 | 28 |
| TGA - Masseverlust [%] | 0,4 | 0,6 | 0,9 | 1,8 | 0,3 |

| | | | | | |
|---|---|---|---|---|---|
| NB=Test nicht bestanden | | | | | |

Die Daten in Tabelle 2 zeigen, dass auch PC/ABS-Blends mit den Phosphor-Silizium-Verbindungen flammwidrig ausgerüstet werden können. Es lassen sich V-2-Bewertungen im UL94V-Test erzielen, und der Glühdrahttest wird bestanden. Auch der LOI zeigt einen Anstieg. In gleicher Einsatzkonzentration zeigen Phosphorsäureester (Vergleichsbeispiel 8) ein schlechteres Verhalten im UL94V-Test und (im Falle der höher FR-effizienten monomeren Phosphorsäureester) stärkeres "Juicing". Teilaromatische Silikone (Vergleichsbeispiel 9) zeigen in gleicher Konzentration ein schlechteres Verhalten im UL94V- und im Glühdrahttest. Beide Tests werden bei einer Einsatzkonzentration von 5 Gew.-Teilen Silikon nicht mehr bestanden.

## Patentansprüche

1. Polycarbonat-Zusammensetzung enthaltend Phosphor-Silizium-Verbindungen der allgemeinen Formel (III) 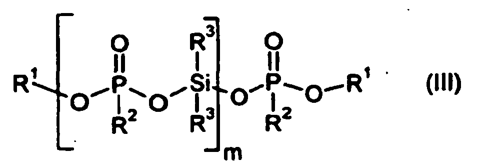 wobei
R¹ unabhängig voneinander Wasserstoff oder C₁-C₄-Alkyl,
R²
a) einen gegebenenfalls durch Aryl oder Alkyl substituierten Arylrest, oder
b) einen gegebenenfalls durch Aryl substituierten Alkylrest, oder
c) einen gegebenenfalls durch Aryl oder Alkyl substituierten Aryloxyrest, oder .
d) einen gegebenenfalls durch Aryl substituierten Alkoxyrest, oder
e) Wasserstoff, und
R³ jeweils unabhängig voneinander gleiche oder unterschiedliche Alkylreste, Arylreste oder mit C₁-C₄-Alkyl substituierte Arylreste
m einen Zahlenwert von 2 bis 1000 bedeutet und
wobei die Reste R² und R³ innerhalb der Polymerkette von Monomer- zu Monomereinheit variieren können,
oder Phosphor-Silizium-Verbindungen der allgemeinen Formel (IV), 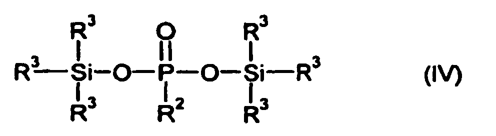 wobei
R² oben stehende Bedeutung hat und
R³ für Phenyl, Kresyl oder Xylyl steht.

2. Zusammensetzung nach Anspruch 1, enthaltend 0,05 bis 30 Gew.-Teile der Phosphor-Silizium-Verbindungen, bezogen auf 100 Gew.-Teile einer Polycarbonat-Zusammensetzung.

3. Zusammensetzung nach Anspruch 2, enthaltend 0,1 bis 20 Gew.-Teile Phosphor-Silizium-Verbindungen.

4. Zusammensetzung nach Anspruch 2, enthaltend 1,5 bis 8 Gew.-Teile Phosphor-Silizium-Verbindungen.

5. Zusammensetzung gemäß Anspruch 1, in welcher die Polycarbonat-Zusammensetzung eine solche ist, enthaltend
A) 60 bis 100 Gew.-Teile aromatisches Poly(esterkarbonat,
B) 0 bis 40 Gew.-Teile mindestens eines Polymers ausgewählt aus Vinyl(co)polymerisaten, kautschukmodifizierten Vinyl(co)polymerisaten und aromatischen Polyestern,
C) 0 bis 5 Gew.-Teile fluoriertes Polyolefin und
D) bis zu 20 Gew.-Teile weiterer Polymere und/oder Polymeradditive,
wobei sich die Gew.-Teile der Komponenten A bis D zu 100 addieren.

6. Zusammensetzung nach Anspruch 5, wobei Komponente B) Pfropfpolymerisate sind von
B.1 5 bis 95 Gew.-% Monomeren einer Mischung aus 50 bis 99 Gew.-%, mindestens eines ausgewählt aus der Gruppe der Vinylaromaten, kernsubstituierten Vinylaromaten und Methacrylsäure-(C₁-C₈)-Alkylester und 1 bis 50 Gew.-%, mindestens eines ausgewählt aus der Gruppe der Vinylcyaniden, (Meth)Acrylsäure-(C₁-C₈)-Alkylester und Derivate ungesättigter Carbonsäuren auf
B.2 95 bis 5 Gew.-% eines oder mehrerer Kautschuke mit Glasübergangstemperaturen <0°C als Pfropfgrundlage.

7. Zusammensetzung nach Anspruch 6, wobei als Monomerenmischung B.1 eine solche zum Einsatz kommt aus 10 bis 90 Gew.-% von mindestens einem Monomeren ausgewählt aus der Gruppe Styrol, α-Methylstyrol und Methylmethacrylat und 90 bis 10 Gew.-% mindestens einem Monomeren ausgewählt aus der Gruppe Acrylnitril, Maleinsäureanhydrid und Methylmethacrylat.

8. Zusammensetzung nach Anspruch 6, wobei die Pfropfgrundlage B.2 ausgewählt ist aus der Gruppe der Dienkautschuke, EP(D)M-Kautschuke, Acrylatkautschuke, Silikonkautschuke sowie Silikon-Acrylat-Kompositkautschuke oder eine Mischung von mindestens zwei der zuvorgenannten Kautschuke darstellt.

9. Zusammensetzung nach Anspruch 5, enthaltend Vinyl(Co)Polymerisate aus 50 bis 99 Gew.-% mindestens einem Monomer ausgewählt aus Styrol, α-Methylstyrol, p-Methylstyrol, p-Chlorstyrol und Methaerylsäure-(C, bis C₈)-Alkylester, und 1 bis 50 Gew.-% mindestens einem Monomer ausgewählt aus Acrylnitril, Methacrylnitril und (Meth)Acrylsäure-(C₁-C₈)-Alkylester.

10. Zusammensetzung nach Anspruch 1, enthaltend Additive ausgewählt aus mindestens einem der Gruppe bestehend aus Hitzestabilisatoren, Hydrolysestabilisatoren, Lichtstabilisatoren, Fließ- und Verarbeitungshilfsmittel, Gleit- und Entformungsmittel, UV-Absorber, Antioxidantien, Antistatika, Konservierungsmittel, Haftvermittler, faser- oder teilchenförmige Füllstoffe und Verstärkungsstoffe, Farbstoffe, Pigmente, Nukleierungsmittel, Verschäumungsmittel, weitere flammhemmende Zusätze und Mittel zur Verringerung der Rauchentwicklung.

11. Verwendung einer Zusammensetzung nach Anspruch 1 zur Herstellung von Formteilen.

12. Formteile erhältlich aus einer Zusammensetzung nach Anspruch 1.

## Claims

1. Polycarbonate composition containing phosphorus-silicon compounds of the general formula (III), 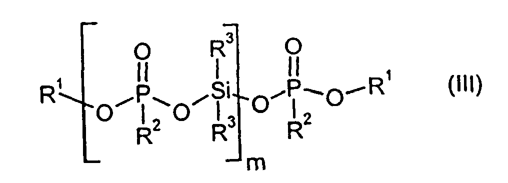 wherein
R¹ represent, independently of one another, hydrogen or C₁-C₄ alkyl,
R² represents
a) an aryl radical optionally substituted with aryl or alkyl, or
b) an alkyl radical optionally substituted with aryl, or
c) an aryloxy radical optionally substituted with aryl or alkyl, or
d) an alkoxy radical optionally substituted with aryl, or
e) hydrogen, and
R³ represent, independently of one another, the same or different alkyl radicals, aryl radicals or aryl radicals substituted with C₁-C₄ alkyl.
m represents a numerical value from 2 to 1000 and
wherein the radicals R² and R³ may vary within the polymer chain from one monomer unit to another,
or phosphorus-silicon compounds of the general formula (IV), 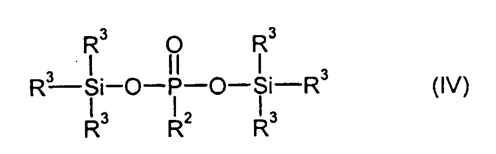 wherein
R² has the above meaning and
R³ stands for phenyl, cresyl or xylyl.

2. Composition according to Claim 1, containing 0.05 to 30 parts by weight of the phosphorus-silicon compounds, relative to 100 parts by weight of a polycarbonate composition.

3. Composition according to Claim 2, containing 0.1 to 20 parts by weight of phosphorus-silicon compounds.

4. Composition according to Claim 2, containing 1.5 to 8 parts by weight of phosphorus-silicon compounds.

5. Composition according to Claim 1, in which the polycarbonate composition is one containing
A) 60 to 100 parts by weight of aromatic poly(ester) carbonate,
B) 0 to 40 parts by weight of at least one polymer selected from vinyl (co)polymers, rubber-modified vinyl (co)polymers and aromatic polyesters,
C) 0 to 5 parts by weight of fluorinated polyolefin and
D) up to 20 parts by weight of other polymers and/or polymer additives,
the parts by weight of components A to D totalling 100.

6. Composition according to Claim 5, wherein component B) is graft polymers of
B.1 5 to 95 wt.% of monomers of a mixture comprising 50 to 99 wt.% of at least one selected from the group of the vinyl aromatics, ring-substituted vinyl aromatics and methacrylic acid (C₁-C₈) alkyl esters and 1 to 50 wt.% of at least one selected from the group of the vinyl cyanides, (meth)acrylic acid (C₁-C₈) alkyl esters and derivatives of unsaturated carboxylic acids on
B.2 95 to 5 wt.% of one or more rubbers having glass transition temperatures < 0 °C as graft base.

7. Composition according to Claim 6, wherein as monomer mixture B.1 an example is used that contains 10 to 90 wt.% of at least one monomer selected from the group comprising styrene, α-methylstyrene and methyl methacrylate and 90 to 10 wt.% of at least one monomer selected from the group comprising acrylonitrile, maleic anhydride and methyl methacrylate.

8. Composition according to Claim 6, wherein the graft base B.2 is selected from the group comprising the diene rubbers, EP(D)M rubbers, acrylate rubbers, silicone rubbers and silicone-acrylate composite rubbers or a mixture of at least two of the aforementioned rubbers.

9. Composition according to Claim 5, containing vinyl (co)polymers comprising 50 to 99 wt.% of at least one monomer selected from styrene, α-methylstyrene, p-methylstyrene, p-chlorostyrene and methacrylic acid (C₁ to C₈) alkyl ester, and 1 to 50 wt.% of at least one monomer selected from acrylonitrile, methacrylonitrile and (meth)acrylic acid (C₁-C₈) alkyl esters.

10. Composition according to Claim 1, containing additives selected from at least one of the group consisting of heat stabilisers, hydrolysis stabilisers, light stabilisers, flow-control agents and processing aids, lubricants and release agents, UV absorbers, antioxidants, antistatics, preservatives, coupling agents, fibrous or particulate fillers and reinforcing agents, dyes, pigments, nucleating agents, foaming agents, other flame-retarding additives and agents to reduce smoke development.

11. Use of a composition according to Claim 1 for producing mouldings.

12. Mouldings obtainable from a composition according to Claim 1.

## Revendications

1. Composition de polycarbonate contenant des composés phosphore-silicium de formule générale (III) 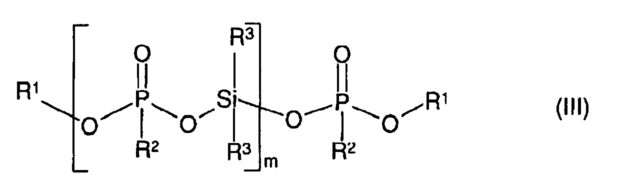 où
R¹ représente indépendamment l'hydrogène ou C₁-C₄-alkyle,
R² représente
a) un groupement aryle éventuellement substitué par aryle ou alkyle, ou
b) un groupement alkyle éventuellement substitué par aryle, ou
c) un groupement aryloxy éventuellement substitué par aryle ou alkyle, ou
d) un groupement alcoxy éventuellement substitué par aryle, ou
e) l'hydrogène, et
R³ représente indépendamment des groupements alkyle identiques ou différents, des groupements aryle ou des groupements aryle substitués avec C₁-C₄-alkyle
m représente un nombre de 2 à 1000 et
où les groupements R² et R³ peuvent varier à l'intérieur de la chaîne polymère d'une unité monomère à une autre unité monomère,
ou des composés phosphore-silicium de formule générale (IV), 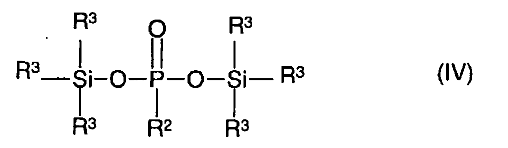 où
R² a la signification ci-dessus et
R³ représente phényle, crésyle ou xylyle.

2. Composition selon la revendication 1 contenant 0,05 à 30 parties en masse de composés phosphore-silicium, pour 100 parties en masse d'une composition de polycarbonate.

3. Composition selon la revendication 2 contenant 0,1 à 20 parties en masse de composés phosphore-silicium.

4. Composition selon la revendication 2 contenant 1,5 à 8 parties en masse de composés phosphore-silicium.

5. Composition selon la revendication 1, dans laquelle la composition de polycarbonate est une composition contenant
A) 60 à 100 parties en masse de poly(ester)carbonate aromatique,
B) 0 à 40 parties en masse d'au moins un polymère choisi parmi les (co)polymères vinyliques, les (co)polymères vinyliques modifiés par un caoutchouc et les polyesters aromatiques,
C) 0 à 5 parties en masse de polyoléfine fluorée et
D) jusqu'à 20 parties en masse d'autres polymères et/ou additifs de polymères,
où les parties en masse des composants A à D s'ajoutent pour donner 100.

6. Composition selon la revendication 5, où le composant B) sont des polymères greffés de
B.1 5 à 95 % en masse de monomères d'un mélange constitué par 50 à 99 % en masse d'au moins un choisi dans le groupe des vinylaromatiques, des vinylaromatiques substitués sur le noyau et des (C₁-C₈)-alkylesters d'acide méthacrylique et 1 à 50 % en masse d'au moins un choisi dans le groupe des vinylcyanures, des (C₁-C₈)-alkylesters d'acide (méth)acrylique et des dérivés d'acides carboxyliques insaturés sur
B.2 95 à 5 % en masse d'un ou plusieurs caoutchoucs ayant des températures de transition vitreuse < 0°C comme base de greffage.

7. Composition selon la revendication 6 où, comme mélange de monomères B.1, on en utilise un constitué par 10 à 90 % en masse d'au moins un monomère choisi dans le groupe styrène, α-méthylstyrène et méthacrylate de méthyle et 90 à 10 % en masse d'au moins un monomère choisi dans le groupe acrylonitrile, anhydride maléique et méthacrylate de méthyle.

8. Composition selon la revendication 6 où la base de greffage B.2 est choisie dans le groupe des caoutchoucs diéniques, des caoutchoucs EP(D)M, des caoutchoucs d'acrylate, des caoutchoucs de silicone ainsi que des caoutchoucs composites silicone-acrylate ou un mélange d'au moins deux des caoutchoucs cités précédemment.

9. Composition selon la revendication 5 contenant des (co)polymères vinyliques constitués par 50 à 99 % en masse d'au moins un monomère choisi parmi le styrène, l'α-méthylstyrène, le p-méthylstyrène, le p-chlorostyrène et les (C₁ à C₈)-alkylesters d'acide méthacrylique et 1 à 50 % en masse d'au moins un monomère choisi parmi l'acrylonitrile, le méthacrylonitrile et les (C₁-C₈)-alkylesters d'acide (méth)acrylique.

10. Composition selon la revendication 1 contenant des additifs choisis parmi au moins l'un du groupe consistant en les stabilisants à la chaleur, les stabilisants à l'hydrolyse, les stabilisants à la lumière, les adjuvants d'écoulement et de mise en oeuvre, les lubrifiants et les agents de démoulage, les absorbeurs UV, les antioxydants, les antistatiques, les conservateurs, les promoteurs d'adhérence, les charges fibreuses ou particulaires et les substances de renforcement, les colorants, les pigments, les agents de nucléation, les agents d'expansion, d'autres additifs ignifugeants et les agents pour réduire le dégagement de fumée.

11. Utilisation d'une composition selon la revendication 1 pour produire des pièces mises en forme.

12. Pièces mises en forme pouvant être obtenues à partir d'une composition selon la revendication 1.
